# EUROPÄISCHE PATENTSCHRIFT

(11) **EP 3 350 616 B1**
(45) Veröffentlichungstag und Bekanntmachung des Hinweises auf die Patenterteilung: **03.11.2021**
(21) Anmeldenummer: 16763800.6
(22) Anmeldetag: 09.09.2016
(51) Int. Cl.: G01S 7/484, G01S 7/487, G01S 7/495, G01S 17/10, G01S 17/42, G01S 17/931

(54) **VERFAHREN UND VORRICHTUNG ZUR OPTISCHEN DISTANZMESSUNG**
METHOD AND DEVICE FOR OPTICALLY MEASURING DISTANCES
PROCÉDÉ ET DISPOSITIF DE MESURE OPTIQUE DE DISTANCE

(30) Priorität: 16.09.2015 EP 15185488
(43) Veröffentlichungstag der Anmeldung: 25.07.2018
(73) Patentinhaber: Ibeo Automotive Systems GmbH, 22143 Hamburg (DE)
(72) Erfinder: KÖHLER, Michael, 22527 Hamburg (DE); KIEHN, Michael, 21039 Hamburg (DE); SCHUBERT, Olaf, 93138 Lappersdorf (DE); KROLL, Hans-Martin, 80636 München (DE)
(74) Vertreter: RGTH
(86) Internationale Anmeldenummer: PCT/EP2016/071307
(87) Internationale Veröffentlichungsnummer: WO 2017/046010

(56) Entgegenhaltungen:
- EP-A1- 2 889 642
- US-A- 3 900 261
- US-A1- 2012 257 186

## Beschreibung

### Technisches Gebiet

Die Erfindung betrifft ein Verfahren zur optischen Distanzmessung sowie eine Vorrichtung zur optischen Distanzmessung.

### Stand der Technik

Optisch aktive Distanzmessungen zu sogenannten Targets, insbesondere zur Anwendung in der fahrerlosen Navigation von Fahrzeugen, beruhen auf dem Time of Flight Prinzip. Meistens wird ein scannender Sensor, bevorzugterweise LIDAR (Abkürzung für "Light detection and ranging") Sensor, eingesetzt, der periodisch Pulse aussendet. Die Pulse werden von den Oberflächen von Festkörpern, Staub und Gasen unterschiedlich reflektiert, wobei die reflektierten Pulse in Richtung des Sensors detektiert werden. Aus der Bestimmung der Laufzeit der Pulse von dem Sensor zu Objekten und zurück kann mithilfe der Lichtgeschwindigkeit auf die Distanz zu diesen Objekten geschlossen werden.

EP 2 889 642 A1 beschreibt ein Verfahren zur Entfernungsmessung von Umgebungszielen durch Laufzeitmessung von daran reflektierten Impulsen, insbesondere Laserimpulsen.

US 3 900 261 A offenbart ein Intervall-Messsystem um Zeitintervalle zu bestimmen, während US 2012/0257186 A1 ein Verfahren zur Distanzmessung offenbart, das die Ermittlung der Laufzeit von Laserpulsen umfasst.

Nachteilig an aus dem Stand der Technik bekannten Systemen ist die strenge Periodizität der ausgesendeten Pulse. Aufgrund der Tatsache, dass die Aussendung der Pulse periodisch erfolgt, ist es beispielsweise möglich, dass deren Periodizität von einem Störer messtechnisch erkannt wird und bewusst zur Störung geeignete Lichtpulse mit annähernd gleicher Periodizität im Erfassungsbereich des LIDAR-Sensors in dessen Richtung gesendet werden. So könnten deterministisch Falschdetektionen vorkommen, die die Distanzmessung zu den Targets erheblich stören. Ferner können ebenso nicht bewusst platzierte Störquellen, die vor allem ein periodisches Störsignal erzeugen und die Detektion der zur Messung ausgesendeten Pulse erschweren. Die nicht bewusst platzierten Störquellen sind zufällige, den Umgebungsbedingungen geschuldete Quellen. Der Grund dieser Störanfälligkeit der bekannten Systeme zur Distanzmessung ist, dass die Systeme Störpulse, insbesondere periodische Störpulse, nicht von den eigenen, ausgesandten Messpulsen zur Distanzmessung unterscheiden können und somit fehlerhaft Signale aus Störquellen in die Distanzmessung miteinbeziehen. Messungen auf nicht existierende Targets, sogenannte Fehlmessungen sind die Folge. Auch scannende LIDAR-Sensoren mit einer rotierenden Pulsablenkungseinheit, bspw. einem drehendem Spiegel oder einem drehendem Sensorkopf, die bzw. der Pulse vor Aussendung zur Distanzmessung in verschiedene Richtungen, d.h. unter verschiedenen Winkeln zu einer Sensorebene, ablenkt, vermögen die oben aufgezeigte Problematik nicht zu lösen. Bekannte Pulsablenkungseinheiten werden mit einer konstanten Drehfrequenz betrieben und das Aussenden von Sendepulsen sowie das Messen der Laufzeiten der reflektierten Echos der Pulse finden unter bestimmten Winkeln statt. Auch bei dieser Ausführungsform ist das Prinzip des Messverfahrens einfach von Störern nachzuvollziehen und damit ebenso anfällig für bewusste oder unbewusste Störungen.

Gerade im Bereich des autonomen Fahrens, d.h. der fahrerlosen Navigation eines Fahrzeugs, ist eine derartige fehlende Robustheit gegen gezielt eingebrachte oder unbewusst vorhandene Störquellen insbesondere aus Sicherheitsaspekten nicht hinnehmbar.

### Darstellung der Erfindung: Aufgabe, Lösung, Vorteile

Der Erfindung liegt die Aufgabe zu Grunde ein Verfahren zur Distanzmessung derart zu verbessern, dass dessen Störanfälligkeit gegenüber Störpulsen erheblich reduziert wird. Ziel ist es ferner eine Vorrichtung zur Distanzmessung derart weiterzubilden, dass diese robust gegenüber Störpulsen ausgebildet ist.

Gelöst wird die oben genannte Aufgabe durch ein Verfahren zur optischen Distanzmessung, wobei mittels einer Pulserzeugungseinheit eine Vielzahl von Messpulsen emittiert und aperiodisch ausgesendet wird. Mindestens ein ausgesendeter Messpuls wird von einem oder bevorzugterweise mehreren Targets in Form eines reflektierten Messpulses reflektiert, wobei ein Detektor den vom Target zum Detektor reflektierten Messpuls detektiert. Es wird die Laufzeit des Messpulses zum Target ermittelt, wonach mithilfe der Lichtgeschwindigkeit die vom Messpuls zurückgelegte Distanz zu dem Target bestimmt wird. Genauer wird die Laufzeit des Messpulses zum Target und zurück gemessen, wobei aus dieser dann die Laufzeit des Messpulses zum Target durch Division mit dem Divisor Zwei bestimmt wird. Bei einem Target handelt es sich um ein Messobjekt.

Eine optische Distanzmessung zeichnet sich dadurch aus, dass unter Ausnutzung von optischen Signalen, insbesondere optischen Messpulsen, Distanzen bestimmt werden. Unter dem Begriff "Distanz" ist eine Entfernung zu verstehen. Unter der vom Messpuls zurückgelegten Distanz ist die Strecke zwischen Pulserzeugungseinheit und Target plus der Strecke zwischen Target und Detektor zu verstehen, sprich die Summe der Entfernungen zwischen der Pulserzeugungseinheit und dem Target und zwischen dem Target und dem Detektor. Da es sich bei dem Target typischerweise um einen dreidimensionalen Körper handelt, können einige Bereiche des Targets näher und andere Bereiche des Targets weiter entfernt angeordnet sein. Mit dem Begriff "Distanz zu dem Target" ist die Entfernung zu zumindest einer Stelle des Targets gemeint, und zwar zu der Stelle, auf die ein Messpuls aufgetroffen und an der dieser reflektiert wurde. Mit Laufzeit ist die Zeit zu verstehen, die der Messpuls für die genannte Distanz gebraucht hat.

Bei einem Puls handelt es sich um ein optisches, insbesondere elektromagnetisches Signal. Bevorzugterweise weist ein Puls eine Pulsdauer auf. So kann man einen Puls als eine zeitlich begrenzte Portion elektromagnetischer Strahlung verstehen. Dabei ist die Pulsdauer die zeitliche Breite des Pulses, d.h. der zeitliche Abstand zwischen dem Anfang und dem Ende eines Pulses. Die Pulse, die zur Distanzmessung ausgesendet werden und bevorzugterweise von dem Target reflektiert werden, werden als Messpulse bezeichnet. Da es sich bei einem Puls um ein elektromagnetisches Signal handelt und somit die Geschwindigkeit des Pulses bekannt ist, kann aus der Laufzeit eines Messpulses mithilfe der Lichtgeschwindigkeit darauf geschlossen werden, welche Strecke der Messpuls in der Laufzeit hinter sich gebracht hat. Insbesondere handelt es sich bei einem Messpuls um einen Laserpuls, sodass die Pulserzeugungseinheit vor allem einen Laser, insbesondere gepulsten Laser, umfasst. Vorteilhafterweise handelt es sich bei der Pulserzeugungseinheit um eine Laserdiode. Bevorzugterweise besteht die Pulserzeugungseinheit aus einem Laser. Ferner kann die Pulserzeugungseinheit bevorzugterweise mehrere Laser umfassen. Der Messpuls ist vorteilhafterweise ein Lichtpuls, d.h. ein Puls mit einer Wellenlänge aus dem für das menschliche Auge unsichtbaren Teil des elektromagnetischen Spektrums.

Insbesondere umfasst das Verfahren die Berücksichtigung der genauen Position der Pulserzeugungseinheit und des Detektors, insbesondere in Relation zueinander. Somit kann mithilfe dieser Informationen aus der Laufzeit des Messpulses von der Pulserzeugungseinheit über das Target zum Detektor auf die Distanz der Pulserzeugungseinheit zum Target und/oder die Distanz des Detektors zum Target geschlossen werden. Das Verfahren umfasst ferner insbesondere das Anordnen der Pulserzeugungseinheit und des Detektors in einer Vorrichtung zur optischen Distanzmessung und eine Verwendung dieser zur Distanzmessung. Aufgrund der zueinander bekannten Anordnung der Pulserzeugungseinheit und des Detektors innerhalb einer Vorrichtung zur optischen Distanzmessung kann die Distanz von der Vorrichtung zu einem Target ermittelt werden.

Bei dem Verfahren handelt es sich bevorzugterweise um ein Verfahren zur Navigation eines Fahrzeuges, insbesondere Automobils, wobei das Fahrzeug insbesondere autonom steuert, d.h. mittels der Navigation eine fahrerlose Fortbewegung des Fahrzeugs ermöglicht wird. Unter dem Begriff "Target" können eigens zur Navigation des Fahrzeuges angeordnete und vorzugsweise dafür dienende Markierungen verstanden werden. Zudem können Targets Umgebungsmerkmale darstellen, die sich in der Umgebung des Fahrzeugs befinden und deren Positionen zur Navigation des Fahrzeuges verwendet werden. Darunter fallen bspw. Bäume, Kantsteine, Fahrbahnmarkierungen oder andere stehende oder sich bewegende Verkehrsteilnehmer. In einem solchen Fall werden zur Navigation typischerweise keine zusätzlich, eigens und ausschließlich für die Navigation angeordnete Markierungen verwendet.

Die Pulserzeugungseinheit erzeugt und emittiert eine Vielzahl von Messpulsen. Damit die Distanz zu dem Target ermittelt werden kann, werden die emittierten Messpulse zur Distanzmessung ausgesendet, wobei mindestens ein Messpuls an dem Target reflektiert werden muss. Der zuvor in eine bestimmte Richtung ausgesendete Messpuls läuft durch die Reflexion an dem Target in die entgegengesetzte Richtung zurück. Die anderen, nicht an dem Target reflektierten Messpulse können bspw. an anderen Targets reflektiert werden oder eine derart weite Strecke hinter sich legen, bis sie auf ein Target treffen, dass ihre Reflexion vom Detektor nicht mehr wahrgenommen wird. Insbesondere eignet sich das Verfahren zur Bestimmung der Distanz zu mehreren Targets, insbesondere sämtlichen Targets in der unmittelbaren Umgebung einer Vorrichtung zur Distanzmessung.

Bei dem von dem Target reflektierten Messpuls handelt es sich um einen Messpuls, der zuvor ausgesendet wurde, nur dass sich nun seine Ausbreitungsrichtung verändert hat. Man kann den reflektierten Messpuls somit als Echo des ausgesendeten Messpulses verstehen. Die vorliegende Erfindung bezeichnet einen Messpuls, der zur Messung ausgesendet wird, als einen ausgesendeten Messpuls, insbesondere nachdem dieser bereits von einer Pulserzeugungseinheit emittiert und bevorzugterweise mittels einer Pulsablenkungseinheit abgelenkt wurde, während der vom Target reflektierte Messpuls als reflektierter Messpuls betitelt wird, obwohl es sich freilich um denselben Messpuls zu unterschiedlichen Zeiten handelt.

Erfindungsgemäß werden die Messpulse aperiodisch zur Distanzmessung ausgesendet. Das bedeutet, dass die Aussendung nicht periodisch, d.h. nicht in zeitlich festem Schema, erfolgt. Ausgesendete, aufeinander folgende Messpulse, genauer deren Aussendungszeitpunkte, haben also einen unterschiedlichen zeitlichen Abstand zueinander. Unter dem Begriff "Aussendung" ist bevorzugterweise die endgültige Aussendung zur Distanzmessung gemeint, sodass das Verfahren keine weitere Umlenkung der Messpulse umfasst. Verwendet das Verfahren eine Vorrichtung zur Distanzmessung, berühren ausgesendete Messpulse nach ihrer Aussendung keine weiteren Optiken zur Strahlführung. Insbesondere kann unter dem Aussenden zur Distanzmessung das Verlassen der Vorrichtung verstanden werden. Diese Definition erlaubt, dass eine Aperiodizität auf unterschiedlichen Weisen, bei unterschiedlichen Schritten des Verfahrens, hervorgerufen werden kann, solange die endgültige Aussendung aperiodisch ist. Bevorzugterweise erfolgt die Aussendung der Messpulse in Richtung des Targets, insbesondere nachdem die Messpulse bereits von einer Pulserzeugungseinheit emittiert und nachdem sie bevorzugterweise mittels einer Pulsablenkungseinheit abgelenkt wurden.

Bei emittierten Messpulsen handelt es sich somit nicht um ausgesendete Messpulse. Emittierte Messpulse haben zwar bereits die Pulserzeugungseinheit verlassen, wurden im Sinne der Erfindung jedoch noch nicht endgültig zur Distanzmessung ausgesendet. Beispielsweise können Messpulse von der Pulserzeugungseinheit emittiert werden, bevor sie an einer Pulsablenkungseinheit endgültig abgelenkt, und somit ausgesendet werden. Es können jedoch auch die direkt von der Pulserzeugungseinheit erzeugten Pulse zur Distanzmessung ohne eine weitere Ablenkung ausgesendet werden. In diesem Falle werden die erzeugten Pulse von der Pulserzeugungseinheit emittiert und ausgesendet.

Die Aperiodizität der Aussendung der Messpulse dient einer größeren Robustheit gegenüber Störpulse. Störpulse zeichnen sich dadurch aus, dass ihre Portion elektromagnetischer Strahlung nicht originär der Pulserzeugungseinheit entstammt. Störpulse dienen nicht zur Distanzmessung und sind somit keine Messpulse. Störpulse werden vielmehr von anderen, hier als Störquellen bezeichneten Erzeugungseinheiten ausgesendet. Insbesondere handelt es sich bei den Störpulsen um Störlicht. Insbesondere werden die Messpulse aperiodisch in die Umgebung einer Vorrichtung zur Distanzmessung ausgesendet.

Erfolgt die Aussendung der Pulse hingegen periodisch, ist ein Verfahren zur Distanzmessung grundsätzlich störanfällig. Dies beruht darauf, dass die Kennwerte des Verfahrens, bspw. die Wiederholrate, sehr leicht von außen nachvollziehbar ist, sodass gezielte Störsignale von einem Störer ausgesendet werden könnten, die zu Fehlmessungen führen können. Bei einer periodischen Aussendung von Messpulsen kann man der Pulsabfolge eine Pulsfrequenz zuordnen, die reziprok angibt, in welchem zeitlichen Abstand die Messpulse aufeinander folgen. Die Frequenz ist nicht mit der Frequenz des zugrundeliegenden elektromagnetischen Signals der Pulse zu verwechseln, die einen Puls an sich charakterisiert, jedoch in keinem Zusammenhang mit der Pulsabfolge steht. Störpulse können somit bewusst auf die Frequenz der periodisch erfolgenden Messpulse synchronisiert werden. Auch wenn keine bewusste Störung erfolgt, können nicht gezielt platzierte Störquellen zu Fehlmessungen führen, da auch derartige Störquellen periodische Signale senden könnten.

Da trotz der Aperiodizität die tatsächlichen Aussendungszeitpunkte innerhalb der Vorrichtung bekannt sind, erzeugt bei dem erfindungsgemäßen Verfahren eine periodische Störpulsquelle aus Sicht des Detektors, bzw. einer Vorrichtung zur Distanzmessung, unkorreliertes Rauschen bezogen auf die tatsächlich zur Distanzmessung genutzten Messpulse, da der Eingang der periodischen Störpulse nicht in Relation zu den aperiodisch ausgesendeten eigenen Messpulsen gesetzt werden kann.

Vorteilhafterweise werden Messpulse unter unterschiedlichen Winkeln ausgesendet, wobei auch detektierte Pulse aus unterschiedlichen Winkeln empfangen werden. Unter dem Begriff "Winkel" sind vor allem Raumwinkel gemeint. Der Winkel gibt an, in welche genaue Richtung der Messpulse bspw. in Bezug auf das Gehäuse einer Vorrichtung zur Distanzmessung ausgesendet und/oder empfangen wird. Durch das Aussenden unter unterschiedlichen Winkeln werden die Messpulse in unterschiedliche Richtungen ausgesendet. Ebenso werden reflektierte Messpulse aus verschiedenen Winkeln, sprich aus unterschiedlichen Richtungen, empfangen. Auf Basis von Messdaten aus unterschiedlichen Winkeln kann nicht nur auf eine Distanz eines Auftreffpunktes eines einzigen Messpulses auf das Target, und somit auf die Distanz zu nur einer Stelle des Targets, geschlossen werden, sondern es ist möglich die Distanzen zu verschiedenen Stellen des Targets zu ermitteln. Es sind somit örtlich zusammenhängende Messungen möglich, die erlauben die Kontur des Targets zu bestimmen. Insbesondere unterscheiden sich die Winkel bevorzugterweise nur geringfügig voneinander, sodass ein engmaschiges Abtasten der Umgebung und somit Scannen möglich ist.

Insbesondere umfasst das Verfahren die Verwendung einer Vorrichtung zur optischen aktiven Distanzmessung, wobei es sich bei dieser bevorzugterweise um eine scannende Vorrichtung, insbesondere um einen scannenden LIDAR-Sensor, handelt. Unter dem Begriff "Scannen" ist ein Abtasten mindestens eines Targets, bevorzugterweise der Umgebung der Vorrichtung, zu verstehen. Erfolgt die Aussendung von Messpulsen in einem scannenden Verfahren periodisch, ist es möglich, dass Störpulse auf die entsprechende Frequenz der Messpulsabfolge abgestimmt sein könnten, sodass detektierte Störpulse fälschlicherweise als in einem örtlichen Kontext zueinander stehende Messpulse interpretiert werden. Da es keine Möglichkeit für ein solches Verfahren bzw. eine entsprechende Vorrichtung gibt die Messdaten zu validieren, könnte es bei der Messung zu einer gesamten "Verschiebung" des vermessenen Targets in Bezug auf die Vorrichtung und somit einer Fehlmessung kommen.

Bevorzugterweise wird zum Aussenden von Messpulsen unter unterschiedlichen Winkeln eine erste Pulsablenkungseinheit verwendet, wobei zum Empfangen von reflektierten Messpulsen aus unterschiedlichen Winkeln eine zweite Pulsablenkungseinheit verwendet wird. Die erste Pulsablenkungseinheit wird dazu verwendet, die Messpulse nach Emission aus der Pulserzeugungseinheit unter unterschiedlichen Winkeln zur Messung abzulenken und somit auszusenden. Dadurch muss sich die Pulserzeugungseinheit zum Aussenden der Messpulse unter unterschiedlichen Winkeln nicht selbst bewegen. Die Messpulse werden von der Pulserzeugungseinheit bevorzugterweise in eine Richtung, d.h. unter einem Winkel emittiert, jedoch anschließend mithilfe der ersten Pulsablenkungseinheit nacheinander unter verschiedenen Winkeln ausgesendet. Insbesondere wird die aktuelle Winkelposition der Pulsablenkungseinheit mittels eines Winkelgebers bestimmt und zur Distanzmessung mit einbezogen. Die jeweils aktuelle Winkelposition der Pulsablenkungseinheit wird bevorzugterweise in Form von Winkelsignalen an einen Winkelgeber übertragen. Bevorzugterweise ist der Abstand zwischen zwei aufeinander folgenden Winkeln, unter denen jeweils ein Messpuls ausgesendet wird, identisch. Es kann somit ein gleichmäßiges Scannen erfolgen.

Bei der ersten Pulsablenkungseinheit handelt es sich bevorzugterweise um einen drehbaren Spiegel. Insbesondere rotiert die erste Pulsablenkungseinheit mit konstanter Geschwindigkeit. Es kann alternativ auch die gesamte Vorrichtung zur Distanzmessung drehbar sein oder mindestens einen drehbaren Scankopf aufweisen, sodass auch auf diese Weise eine Aussendung unter verschiedenen Winkeln möglich ist. Dabei drehen sich der drehbare Spiegel und/oder die drehbare Vorrichtung, insbesondere der drehbare Scankopf der Vorrichtung, bevorzugterweise mit konstanter Winkelgeschwindigkeit. Ferner kann es sich bei der Pulsablenkungseinheit um andere die Bewegungsrichtung von Pulsen beeinflussenden optische Einheiten handeln, wie bspw. einen sogenannten MEMS Spiegel, sprich ein elektromechanischen Mikrospiegel, oder ein phasengesteuertes optisches Element, sogenannte "phased-array optics", bei denen durch eine räumliche Modifikation der optischen Phase eine Ablenkung von Pulsen in verschiedene Richtungen erfolgen kann. Bei "phased-array optics" werden bevorzugterweise ein von einer Laserquelle abgegebenes Licht in ein Vielzahl von Pfaden geleitet, auf denen die entsprechenden Anteile eine individuelle Phasenverschiebung erfahren. Durch anschließende Überlagerung der in ihren Phasen beeinflussten verschiedenen Pfade kann erreicht werden, dass sich Strahlung nur in einer bestimmten Richtung ausbreitet, die durch Änderung der Phasen verändert werden kann.

Ferner bevorzugt wird zum Empfangen von Pulsen aus unterschiedlichen Winkeln eine zweite Pulsablenkungseinheit verwendet. Damit sich der Detektor zum Detektieren der Pulse aus verschiedenen Winkeln nicht selber bewegen muss, werden die Pulse zwar unter einem Winkel in den Detektor geleitet, jedoch zuvor aus unterschiedlichen Winkel empfangen. Bevorzugterweise empfängt die zweite Pulsablenkungseinheit die Pulse aus unterschiedlichen Winkeln und lässt diese unter einem festen Einfallswinkel auf den Detektor treffen. Bei der zweiten Pulsablenkungseinheit handelt es sich bevorzugterweise um einen drehbaren Spiegel. Alternativ kann der Detektor auch derart ausgebildet sein, dass er trotz fester Position dazu in der Lage ist, Pulse aus unterschiedlichen Winkeln zu detektieren, sodass die Notwendigkeit einer zweiten Pulsablenkungseinheit entfällt. Die zweite Pulsablenkungseinheit oder der Detektor drehen sich bevorzugterweise mit konstanter Winkelgeschwindigkeit.

Vorteilhafterweise wird zum Aussenden der Messpulse unter unterschiedlichen Winkeln und zum Empfangen der Pulse aus unterschiedlichen Winkeln dieselbe Pulsablenkungseinheit, insbesondere derselbe Spiegel, verwendet. Das bedeutet, dass die erste und die zweite Pulsablenkungseinheit identisch sind. Alternativ können die erste und die zweite Pulsablenkungseinheit nicht identisch, sondern zwei unabhängige Einheiten, sein, wobei deren Bewegungen bevorzugterweise zueinander synchronisiert sind.

Insbesondere werden reflektierte Messpulse bei der zweiten Pulsablenkungseinheit unter den Winkeln empfangen, unter denen sie zuvor bei der ersten Pulsablenkungseinheit ausgesandt wurden. Dies ist daher sinnvoll, da sich die Messpulse nach Reflexion am Target genau in entgegengesetzte Richtungen ausbreiten und daher bekannt ist, dass ausschließlich am Target reflektierte Messpulse unter denselben Winkeln wieder eintreffen müssen. Insbesondere wird die genaue Winkelposition der Pulsablenkungseinheit beim Empfang eines Pulses mittels eines Winkelgebers bestimmt und zur Distanzmessung miteinbezogen.

Erfindungsgemäß werden periodisch, d.h. in regelmäßigen zeitlichen Abständen, Triggersignale für die Pulserzeugungseinheit erzeugt. Unter einem Triggersignal ist ein Signal zu verstehen, das ein bestimmtes Ereignis, hier die Erzeugung eines Messpulses, auslöst. Die Frequenz, unter der Triggersignale erzeugt werden, wird auch als Trägerfrequenz bezeichnet. Damit die Aussendung der Messpulse aperiodisch erfolgt, wird der Empfang, in anderen Worten der Eingang oder das Eintreffen, der Triggersignale bei der Pulserzeugungseinheit mittels einer Verzögerungseinheit verzögert. Die resultierende Verzögerung eines Signals wird auch als Delay bezeichnet. Die Triggersignale werden bevorzugt vom Winkelgeber erzeugt. Insbesondere erzeugt der Winkelgeber die Triggersignale bei zuvor festgelegten Winkelpositionen der ersten Pulsablenkungseinheit. Bevorzugterweise werden Triggersignale in konstanten Winkelschritten erzeugt, wobei ein Winkelschritt insbesondere der horizontalen Winkelauflösung der Pulsablenkungseinheit entspricht. Da sich die erste Pulsablenkungseinheit bevorzugterweise mit konstanter Winkelgeschwindigkeit dreht, werden die Triggersignale periodisch erzeugt. Insbesondere werden diese Triggersignale dann mittels der Verzögerungseinheit verzögert.

Bevorzugterweise empfängt die Verzögerungseinheit die Triggersignale, bevor diese die Pulserzeugungseinheit erreichen, und gibt diese verzögert an die Pulserzeugungseinheit wieder. Die Verzögerungseinheit trägt insbesondere dafür Sorge, dass die Triggersignale für die Pulserzeugungseinheit zur Erzeugung von Messpulsen verzögert werden, und zwar derart, dass die Aussendung, genauer die Aussendungszeitpunkte, der Messpulse aperiodisch erfolgt. Dazu werden mittels der Verzögerungseinheit die Triggersignale für die Pulserzeugungseinheit um Verzögerungszeiten verzögert. Ein Triggersignal wird vorteilhafterweise jeweils um eine Verzögerungszeit verzögert, wobei die Verzögerungszeiten in einer Weise variieren, dass eine Aperiodizität der Aussendung der Messpulse folgt. Die Triggersignale werden von der Verzögerungseinheit gewissermaßen aufgehalten und somit verspätet, erst nach dem Ablauf einer Verzögerungszeit, zur Pulserzeugungseinheit weiter gesendet. Betrachtet man ein einzelnes Triggersignal, so wird dessen Empfang, genauer dessen Empfangszeitpunkte bei der Pulserzeugungseinheit verspätet, sodass die Erzeugung des entsprechenden Messpulses und somit auch dessen Emission aus der Pulserzeugungseinheit sowie dessen Aussendung um die jeweils gleiche Verzögerungszeit verzögert wird. Die Verzögerungseinheit kann hierzu sämtliche Triggersignale verzögern, und zwar, damit eine Aperiodizität resultiert, mit variierender Verzögerungszeit. Auch möglich ist, dass die Verzögerungseinheit nicht alle, sondern nur einige der Triggersignale verzögert, während sie andere Triggersignale unbeeinflusst lässt.

Erfindungsgemäß wird nach einer Alternative eine aperiodische Aussendung von Messpulsen dadurch erreicht, dass die von der Pulserzeugungseinrichtung emittierten Messpulse mithilfe einer Verzögerungseinheit verzögert werden. Bei der Verzögerungseinheit kann es sich vor allem um die erste Pulsablenkungseinheit handeln, oder jede andere Optik, an der die emittierten Messpulse vor Ausendung reflektiert werden. Die Verzögerung erfolgt vorteilhafterweise durch eine geringfügige Winkelvariation der an sich konstantem Drehfrequenz der Verzögerungseinheit, insbesondere der ersten Pulsablenkungseinheit oder einer anderen Optik, bspw. realisiert durch die Verwendung eines Schrittmotors. Insbesondere dreht sich die Pulsablenkungseinheit mit einer konstanten Winkelgeschwindigkeit, jedoch werden kleine Winkelvariationen zugelassen, sodass die Messpulse zu leicht unterschiedlichen Zeitpunkten reflektiert und somit ausgesendet werden. Die Aussendung erfolgt jedoch dann auch in leicht verschiedene Winkel. Um die verzögerten Messpulse dennoch unter dem gleichen Winkel auszusenden, kann zusätzlich synchron zur Winkelvariation der Drehfrequenz der Pulsablenkungseinheit die Pulswiederholrate der Messpulse angepasst werden.

Ferner kann es sich bei der Verzögerungseinheit um einen Jittergenerator handeln, der die emittierten Messpulse empfängt und verzögert weiterleitet oder aussendet. Der Eingang der Triggersignale bei der Pulserzeugungseinheit erfolgt periodisch, da die, wie oben beschrieben, periodisch erzeugten Triggersignale unverzögert die Pulserzeugungseinheit erreichen. Als Folge werden die Messpulse periodisch erzeugt und emittiert. Die periodisch emittierten Messpulse werden dann derart verzögert, dass die Aussendung der Messpulse aperiodisch ist. Die Verzögerung kann dabei so erfolgen, wie bereits oben bei der Beschreibung der Verzögerung der Triggersignale ausgeführt.

Zur Ermittlung der Laufzeit des Messpulses werden insbesondere die Aussendung des Messpulses und die Detektion des entsprechenden, reflektierten Messpulses berücksichtigt. Dabei entsprechen ausgesendete Messpulse und reflektierte Messpulse dann einander, wenn sie unter demselben Winkel ausgesendet bzw. empfangen worden sind. Hier steckt die Annahme dahinter, dass die Lichtgeschwindigkeit sehr groß gegenüber der Änderung des Aussendewinkels bzw. des Winkels der Pulsablenkungseinheit ist. Über die Übereinstimmung des Aussendewinkels und des Empfangswinkels wird somit eine Zugehörigkeit eines ausgesendeten Messpulses zu seinem Echo als reflektierter Puls hergestellt.

Insbesondere werden zur Bestimmung der Laufzeit des Messpulses ein erster und ein zweiter Zeitmesser verwendet, deren jeweilige Zeitmessung durch das den Messpuls auslösende Triggersignal, insbesondere das verzögerte Triggersignal, gestartet wird. In anderen Worten werden der erste und der zweite Zeitmesser erst durch Eingang eines Triggersignals aktiv. Dafür wird bevorzugterweise ein Teil des, insbesondere verzögerten, Triggersignals zur Pulserzeugungseinheit für die Erzeugung eines Messpulses geschickt, während ein anderer Teil derart ausgekoppelt wird, dass dieser bei dem ersten und dem zweiten Zeitmesser zu deren Aktivierung eintrifft. Bei dem ersten Zeitmesser handelt es sich bevorzugterweise um einen Startpulstimer und beim zweiten Zeitmesser um einen Eventpulstimer.

Ferner bevorzugt wird ein von der Pulserzeugungseinheit erzeugter Messpuls als Startpuls zu dem ersten Zeitmesser, insbesondere zu einem Startpulstimer, geleitet. Dafür wird bevorzugterweise ein Teil des Messpulses in Richtung des ersten Zeitmessers ausgekoppelt, während der andere Teil in Richtung des Targets geleitet wird. Es kann sich bei dem Startpuls auch um einen elektrischen anstatt optischen Puls handeln. Dieser wird bevorzugt aus dem Strom durch die Pulserzeugungseinheit ausgekoppelt.

Die Zeitmessung des ersten Zeitmessers wird durch das verzögerte Triggersignal ausgelöst. Der erste Zeitmesser bestimmt insbesondere die Zeit zwischen dem Eingang des verzögerten Triggersignals beim ersten Zeitmesser bis zum Eingang des Startpulses beim ersten Zeitmesser. Die ermittelte Zeit steht bevorzugterweise als Signal am Ausgang des ersten Zeitmessers zur Distanzermittlung zur Verfügung.

Der entsprechende reflektierte Messpuls wird als elektrischer Empfangspuls an einen zweiten Zeitmesser, insbesondere einen Eventpulstimer, geleitet, dessen Zeitmessung insbesondere ebenso durch das verzögerte Triggersignal gestartet wird. Der Empfangspuls wird bevorzugterweise aus dem empfangenen Messpuls ausgekoppelt, insbesondere mittels des Detektors. Dabei können auch eine Vielzahl von Empfangspulsen, insbesondere mindestens zwei oder drei Empfangspulse, ausgelöst bzw. ausgekoppelt werden, sodass mehrere Zeitmessungen durchgeführt werden. Dies dient dazu eine korrekte Zeitmessung auch bei Störungen, bspw. durch Regentropfen auf der Windschutzscheibe, zu gewährleisten.

Der zweite Zeitmesser misst bevorzugterweise die Zeit zwischen dem Eingang des verzögerten Triggersignals beim zweiten Zeitmesser und dem Eingang des Empfangspulses beim zweiten Zeitmesser, die vorteilhafterweise am Ausgang des zweiten Zeitmessers vorliegt. Aus den beiden, von den Zeitmessern gemessenen Zeiten lässt sich die Zeit zwischen dem Eingang des Startpulses und dem Eingang des Empfangspuls durch Differenzbildung ermitteln und mithilfe der Lichtgeschwindigkeit die Distanz zum Target, an dem der Messpuls reflektiert wurde, bestimmen. Da die Verzögerung des Triggersignals in beiden Messwerten der Zeitmesser vorhanden ist, entfällt sie durch die Differenzbildung, sodass zur Laufzeitermittlung das Wissen über die Verzögerung der einzelnen Pulse nicht zwingend notwendig ist.

Streng genommen wird durch die Differenzbildung die Zeit zwischen dem Eingang des Startpulses beim ersten Zeitmesser und dem Eingang des Empfangspulses beim zweiten Zeitmesser ermittelt. So könnte es bei unterschiedlichen Laufzeiten der Signale zu den Zeitmessern vorkommen, dass die Differenz noch nicht die tatsächliche Laufzeit des Messpulses wiedergibt. Dies ist allerdings unkritisch, da das Wissen um die Anordnung der Verzögerungseinheit, die das verzögerte Triggersignal aussendet, der Pulserzeugungseinheit, die den Startpuls aussendet, und des Detektors, der den Empfangspuls aussendet, sowie des ersten und des zweiten Zeitmessers vorliegt und somit etwaige anderweitige Laufzeiten der Signale zu dem ersten und dem zweiten Zeitmesser berücksichtigt werden können.

Bevorzugterweise stellen der erste und der zweite Zeitmesser zwei unterschiedliche Zeitmesser dar. Ferner kann der erste und der zweite Zeitmessers durch nur einen Zeitmesser verkörpert sein, der beide oben beschriebene Aufgaben des ersten und es zweiten Zeitmessers erfüllt.

In der Ausführungsform, in der die emittierten Messpulse verzögert werden, können zur Zeitmessung ebenfalls die zwei oben beschriebenen Zeitmesser verwendet werden. Der einzige Unterschied besteht in den Zeiten, die die Zeitmesser bestimmen. Bevorzugterweise startet das Triggersignal die Zeitmessungen beider Zeitmesser. Da in dieser Ausführung nicht die Triggersignale verzögert werden, sondern die periodisch ausgelösten und emittierten Messpulse, startet das nicht verzögerte Triggersignal die Messung der beiden Zeitmesser.

Der erste Zeitmesser misst insbesondere die Zeit zwischen dem Eingang des unverzögerten Triggersignals beim ersten Zeitmesser bis zum Eingang des Startpulses beim ersten Zeitmesser. Der zweite Zeitmesser misst bevorzugterweise die Zeit zwischen dem Eingang des unverzögerten Triggersignals beim zweiten Zeitmesser bis zum Eingang des Empfangspulses beim zweiten Zeitmesser. Dabei werden der Startpuls sowie der Empfangspuls wie oben beschrieben ausgelöst. Da allerdings der emittierte Messpuls verzögert wird, umfasst die vom zweiten Zeitmesser bestimmte Zeit die Verzögerung des Messpulses, während die vom ersten Zeitmesser bestimmte Zeit die Verzögerung nicht umfasst, sodass die Verzögerung bei Differenzbildung nicht entfällt. Beim Bestimmen der Laufzeit muss die Verzögerung von der Differenz der von den Zeitmessern bestimmten Zeiten noch abgezogen werden. Da es sich um eine bewusst aufgezwungene Verzögerung handelt, liegt das Wissen um die Verzögerungszeiten vor, sodass die Laufzeit und somit die Distanz ohne weiteres bestimmt werden können.

Erfindungsgemäß verzögert die Verzögerungseinheit die Triggersignale oder die emittierten Messpulse durch Aufprägen eines Jitters. Unter dem Begriff "Jitter" ist normalerweise ein nicht künstlich und nicht absichtlich erzeugtes, natürlich auftretendes Taktzittern bei der Übertragung von digitalen Signalen zu verstehen, das dafür sorgt, dass deren Übertragungszeiten, meist in unerwünschter Weise, variieren. In dem vorliegenden Fall ist das Auftreten eines Jitters als Effekt erwünscht. Demnach erzeugt die Verzögerungseinheit einen künstlichen Jitter, der den Triggersignalen oder den emittierten Messpulsen aufgeprägt wird. Die Triggersignale oder die emittierten Messpulse werden bewusst einem künstlichen Jitter ausgesetzt, der dafür sorgt, dass sich die Aussendungszeiten der Messpulse unterschiedlich verzögern. Die tatsächlichen Aussendungszeitpunkte der Messpulse werden durch den Jitter in Relation zu den eigentlichen Aussendungszeitpunkten für den theoretischen Fall, dass keine Verzögerung stattfindet, unterschiedlich stark verzögert. In anderen Worten werden die Triggersignale oder die emittierten Messpulse bewusst künstlich verjittert. Bei der Verzögerungseinheit handelt es sich dabei insbesondere um einen Jittergenerator. Die Verzögerungseinheit moduliert zum Verjittern der Pulse insbesondere die Phase und/oder die Frequenz der Abfolge der periodisch erzeugten Triggersignale.

Der Jittergenerator umfasst vor allem einen Zufallsgenerator. Dieser Zufallsgenerator kann insbesondere durch eine natürliche Rauschquelle realisiert sein. Beispielsweise kann eine stromdurchflossene Diode zur Erzeugung einer Zufallsfolge verwendet werden. Bei einer stromdurchflossenen Diode entsteht an dem sogenannten p-n Übergang, also dem Materialübergang zwischen Bereichen mit entgegengesetzter Dotierung, ein Rauschen. In regelmäßigen Abständen kann die Amplitude des Rauschens abgegriffen werden und diese analogen Signale mittels eines Analog-Digital-Umwandlers in digitale Werte umgewandelt werden. Somit entsteht eine digitale Zufallsfolge, die auf dem zufälligen Rauschen der Diode basiert. Eine andere Ausführung des Zufallsgenerators könnte auf Pseudo-Zufalls-Folgen basieren, die mit rückgekoppelten Schieberegistern erzeugt werden können. Ferner bevorzugt umfasst der Jittergenerator eine Einheit, die den zu verzögernden Signalen die Verzögerung aufprägt. Insbesondere wird der Verzögerung der Triggersignale oder der emittierten Messpulse die mittels des Zufallsgenerators digitale Zufallsfolge zugrunde gelegt.

Insbesondere handelt es sich bei dem Jitter um einen statistischen Jitter. Insbesondere werden somit die durch den Jitter erzeugten Verzögerungszeiten statistisch, insbesondere hinsichtlich Ihrer Größe unregelmäßig, variiert. Es handelt sich damit insbesondere nicht um einen systematischen Jitter, der dafür sorgen würde, dass alle Messpulse gleichermaßen verzögert werden würden.

Bevorzugterweise erzeugt die Verzögerungseinheit Zufallsfolgen, aus deren Elementen jeweils ein Jitter erzeugt wird. Somit wird die Verzögerung aufgrund des Jitters, und somit die tatsächlichen Aussendungszeitpunkte, für Außenstehende, insbesondere potentielle Störer, unvorhersehbar und unwiederholbar variiert, sodass eine bewusste Störung des Verfahrens unmöglich wird.

Erfindungsgemäß werden nach Ablauf der Dauer eines Messfensters keine Pulse mehr detektiert, wobei der Jitter eine Granularität aufweist und diese größer oder gleich der Dauer des Messfensters ist. Hierdurch wird erreicht, dass eine Mehrzahl der Störpulse außerhalb des aktiven Messfensters eintrifft und mithin gar nicht detektiert wird.

Bei dem Messfenster handelt es sich um eine Zeitspanne mit einer Dauer. Diese ergibt sich aus der Annahme einer maximal zulässigen Messentfernung, da bei der Überschreitung einer bestimmten Entfernung zwischen Target und Vorrichtung keine detektierbaren Reflexionen von Objekten mehr zu erwarten sind. Die Dauer des Messfensters ergibt sich aus der maximal zulässigen Messentfernung und der Lichtgeschwindigkeit, wobei die maximale Entfernung allerdings abhängig ist von der Reflektivität der Objekte. Daher wird in der Praxis oft ein willkürlicher Wert festgelegt. Üblicherweise wird die Messung nach Ablauf der Dauer des Messfensters beendet, sodass der Detektor keine Pulse mehr detektieren kann.

Die Granularität des Jitters ist als Schrittweite der durch ihn ausgelösten Verzögerungen zu verstehen. Je kleiner die Granularität ist, desto weniger unterscheiden sich die Verzögerungszeiten. Je größer die Granularität ist, desto mehr unterscheiden sich, sprich streuen, die Verzögerungszeiten. Die Granularität entspricht der Dauer von mindestens einem Messfenster, bevorzugterweise zwei, ferner bevorzugt drei, Messfenstern.

Vorteilhafterweise werden die Verzögerungszeiten derart gewählt, dass sie zu signifikanten Verschiebungen in den Distanzmessungen führen. Eine solche Wahl der Verzögerungszeiten erhöht erneut die Störrobustheit des Systems. Insbesondere wird der Jitter, bevorzugterweise die Größe des Jitters, so gewählt, dass die Verzögerungszeiten, und somit die zeitlichen Verschiebungen der tatsächlichen Aussendungszeitpunkte der Messpulse gegenüber den theoretischen, unverzögerten Aussendungszeitpunkten, zu signifikanten Verschiebungen in Distanzmessungen führen. Die Größe des Jitters ist dabei ein Maß dafür, wie stark die Aussendungszeitpunkte der Pulse verzögert werden. Je größer der Jitter demnach ist, desto größer sind die aufgeprägten Verzögerungszeiten. Insbesondere entsprechen die Verzögerungszeiten der Dauer von mindestens einem Messfenster, bevorzugterweise mindestens zwei, ferner bevorzugt mindestens drei, Messfenstern.

Insbesondere umfassen die vom Detektor detektierten Pulse Messpulse und Störpulse, da beide gleichermaßen detektiert werden. Dabei werden aufgrund der Aperiodizität der Aussendung der Messpulse detektierte Störpulse, insbesondere periodische Störpulse, von detektierten Messpulsen zur Distanzmessung unterschieden.

Die vorliegende Erfindung ermöglicht somit eine Erkennung von periodischen Störpulsen. Insbesondere umfasst das Verfahren den weiteren Schritt, dass Störpulse nicht zur Distanzmessung berücksichtigt werden, sodass die Messergebnisse durch diese nicht negativ beeinflusst werden. Da die Störpulse als Rauschen klassifiziert werden, kann dies bspw. durch eine Unterdrückung des Rauschens erfolgen.

Die Trägerfrequenz legt bevorzugterweise eine Auslöseperiode fest. Die Auslöseperiode bezeichnet die Zeit, die zwischen zwei unverzögerten Triggersignalen liegen würde. Insbesondere sind die Verzögerungszeiten derart gewählt, dass diese kleiner sind als die Differenz zwischen der Ausleseperiode und dem Messfenster.

Unter einem weiteren Aspekt umfasst die Erfindung eine Vorrichtung zur Distanzmessung, die eine Pulserzeugungseinheit zur Erzeugung von Messpulsen und einen Detektor zum Detektieren von mindestens einem vom Target reflektierten Messpuls umfasst. Dabei ist die Vorrichtung dazu ausgebildet die Messpulse aperiodisch zur Distanzmessung auszusenden. Für diesen Zweck umfasst die Vorrichtung bevorzugterweise eine Verzögerungseinheit, die dazu ausgebildet ist, entweder die von der Pulserzeugungseinheit erzeugten Messpulse oder die Triggersignale für die Pulserzeugungseinheit, die die Messpulse auslösen, derart zu verzögern, dass die Aussendung der Messpulse zur Distanzmessung aperiodisch erfolgt.

Vorteilhafterweise ist die Vorrichtung dazu ausgebildet aufgrund der Aperiodizität der Aussendung der Messpulse zur Distanzmessung vom Detektor detektierte Störpulse, insbesondere periodische Störpulse, von detektierten, an einem Target reflektierten Messpulsen zur Distanzmessung zu unterscheiden.

Insbesondere handelt es sich bei der Vorrichtung um eine scannende Vorrichtung, vorteilhafterweise um einen scannenden LIDAR-Sensor. Dafür umfasst die Vorrichtung eine erste Pulsablenkungseinheit, insbesondere einen drehbaren Spiegel, zum Aussenden der Messpulse unter unterschiedlichen Winkeln sowie eine zweite Pulsablenkungseinheit, insbesondere einen drehbaren Spiegel, zum Empfangen von reflektierten Messpulsen aus unterschiedlichen Winkeln. Bevorzugterweise sind die erste Pulsablenkungseinheit und die zweite Pulsablenkungseinheit identisch. Alternativ kann die Vorrichtung jedoch auch zwei voneinander getrennte Pulsablenkungseinheiten, eine erste und eine zweite, aufweisen.

Die Verzögerungseinheit umfasst vor allem einen Jittergenerator, der einen Jitter erzeugt. Der Jitter wird insbesondere den Triggersignalen für die Pulserzeugungseinheit oder den emittierten Messpulsen aufgeprägt. Bei der Verzögerungseinheit kann es sich ferner um die erste Pulsablenkungseinheit handeln, oder jede andere Optik, an der die emittierten Messpulse vor Ausendung reflektiert werden.

Ferner umfasst die Vorrichtung einen ersten Zeitmesser und einen zweiten Zeitmesser für die Bestimmung der Laufzeit des Messpulses. Dabei handelt es sich bei dem ersten Zeitmesser insbesondere um einen Startpulstimer und bei dem zweiten Zeitmesser insbesondere um einen Eventpulstimer. Es können der erste und der zweite Zeitmesser identisch sein oder durch zwei unabhängige Bauteile verkörpert werden. Vorteilhafterweise umfasst die Vorrichtung Elemente zum Auskoppeln eines Startpulses für den ersten Zeitmesser, sowie Elemente zur Auskopplung mindestens eines Empfangspulses für den zweiten Zeitmesser. Zudem kann die Vorrichtung Elemente zur Auskopplung von Signalen zur Aktivierung der Zeitmesser aus dem Triggersignal für die Pulserzeugungseinheit aufweisen.

Ferner umfasst die Vorrichtung bevorzugterweise einen Winkelgeber zur Auslösung von Triggersignalen und zur Ermittlung der aktuellen Position der ersten Pulsablenkungseinheit. Zur Bestimmung der Laufzeit bzw. der von dem Puls zurückgelegten Zeit weist die Vorrichtung bevorzugterweise eine Auswerteeinheit auf, wobei der erste Zeitmesser und der zweite Zeitmesser Teil der Auswerteeinheit sein können. Ferner ist die Auswerteeinheit dazu ausgebildet gezielte Störversuche mit periodischen Signalen zu erkennen. Dafür wird die Information über die aktuelle Verzögerung auch in der Auswerteeinheit verwendet. Die Auswerteinheit ist dazu ausgebildet zu bestimmen, ob empfangene Signale vorhanden sind, die bezogen auf die Triggersignale immer zum gleichen Zeitpunkt eintreffen. Bei solchen Signalen handelt es sich möglicherweise um einen Störversuch. Die Information über das Eintreffen der Pulse erhält die Auswerteeinheit entweder über den zweiten Zeitmesser, bevorzugterweise einen Eventpulstimer, oder mithilfe eines dritten Zeitmessers, insbesondere einem weiteren Eventpulstimer, der vom ursprünglichen Triggersignal gestartet wird.

Erfindungsgemäß ist die Vorrichtung zur Durchführung des erfindungsgemäßen Verfahrens ausgebildet.

### Kurze Beschreibung der Zeichnungen

Es zeigen schematisch:
- Figur 1: ein Flussdiagramm eines erfindungsgemäßen Verfahrens; und
- Figur 2: ein Zeitverlaufsdiagramm über die Pulsabfolge des erfindungsgemäßen Verfahrens im Vergleich zu einem aus dem Stand der Technik bekannten Verfahren.

### Bevorzugte Ausführungsformen der Erfindung

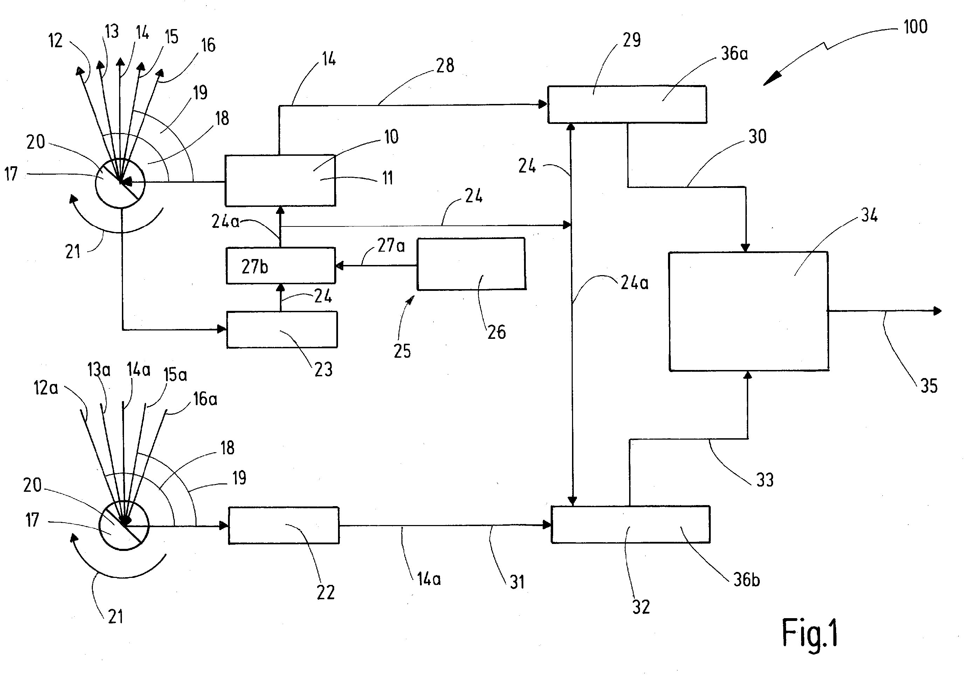

Figur 1 zeigt ein Flussdiagramm eines erfindungsgemäßen Verfahrens zur Distanzmessung, wobei die in Figur 1 dargestellten Pfeile unterschiedliche Signale oder Pulse sowie deren Ausbreitungsrichtungen anzeigen. Ferner ist in Figur 1 eine Vorrichtung (100) zur Distanzmessung gezeigt.

Die Vorrichtung (100) zur Distanzmessung umfasst als Pulserzeugungseinheit (10) einen Laser (11), der als Messpulse (12, 13, 14, 15, 16) Laserpulse emittiert. Ferner weist die Vorrichtung (100) eine erste Pulsablenkungseinheit (17) zum Aussenden von Messpulsen (12, 13, 14, 15, 16) unter verschiedenen Winkeln auf, von denen in Figur 1 beispielhaft zwei Winkel (18, 19) eingezeichnet wurden. Die erste Pulsablenkungseinheit (17) ist als drehbarer Spiegel (20) realisiert, der mit konstanter Drehfrequenz in die mithilfe des gekrümmten Pfeils eingezeichnete Drehrichtung (21) rotiert. Durch Reflexion an dem rotierenden Spiegel (20) werden die Messpulse (12, 13, 14, 15, 16) in die Umgebung der Vorrichtung (100) ausgesendet. Da eine Aussendung der Messpulse (12, 13, 14, 15, 16) unter unterschiedlichen Winkeln (18, 19) erfolgt, handelt es sich bei der Vorrichtung (100) zur Distanzmessung um eine scannende Vorrichtung (100), insbesondere um einen scannenden LIDAR-Sensor.

Die Messpulse (12, 13, 14, 14, 16) werden an Targets reflektiert. Die an Targets reflektierten Messpulse (12a, 13a, 14a, 15a, 16a) werden über eine zweite Pulsablenkungseinheit (17) zum Empfangen reflektierter Messpulse (12a, 13a, 14a, 15a, 16a) wieder unter verschiedenen Winkeln empfangen, von denen beispielhaft die zwei Winkel (18, 19) eingezeichnet sind. Dafür rotiert die zweite Pulsablenkungseinheit (17) mit konstanter Drehfrequenz in die eingezeichnete Drehrichtung (21). Es werden reflektierte Messpulse (12a, 13a, 14a, 15a, 16a) unter demselben Winkel empfangen, unter dem sie zuvor ausgesendet wurden, da sie bei Reflexion an einem Target lediglich eine Richtungsumkehr erfahren.

Die empfangenen Messpulse (12a, 13a, 14a, 14a, 16a) werden von der zweiten Pulsablenkungseinheit (17) an einen Detektor (22) weitergeleitet. Die erste Pulsablenkungseinheit (17) und zweite Pulsablenkungseinheit (17) sind identisch. Sie sind in Figur 1 nur der besseren Übersicht halber als getrennte Einheiten dargestellt. In diesem Zuge wird auch angemerkt, dass zur besseren Übersichtlichkeit Optiken für Strahlfokussierung in Figur 1 vereinfachend weggelassen sind.

Die jeweils aktuelle Winkelposition des Spiegels (21) wird über einen Winkelgeber (23) ermittelt und dekodiert. Dabei überträgt die erste Pulsablenkungseinheit (17) entsprechende Informationen über die Winkelposition an den Winkelgeber (23). In festen Winkelschritten, wobei ein Winkelschritt der horizontalen Winkelauflösung der ersten Pulsablenkungseinheit (17) entspricht, wird jeweils ein Triggersignal (24) für den Laser (11) mittels der Winkelgebers (23) generiert. Da die erste Pulsablenkungseinheit (17) mit konstanter Drehfrequenz rotiert, werden somit periodisch Triggersignale (24) erzeugt. Die Frequenz, mit der die Triggersignale (24) erzeugt werden, wird als Trägerfrequenz bezeichnet. Es ist ein Triggersignal (24) repräsentativ in Figur 1 eingezeichnet.

Die Vorrichtung (100) umfasst zudem eine Verzögerungseinheit (25), die das Triggersignal (24) vom Winkelgeber (23) abfängt, bevor es den Laser (11) erreicht. Die Verzögerungseinheit (25) umfasst einen Jittergenerator (26), der den Triggersignalen (24) einen Jitter (27a) aufprägt, sodass eine Verzögerung (27) des Triggersignals (24) entsteht. Die Größe der Verzögerung (27), sprich die Verzögerungszeit, wird vom Jittergenerator (26) vorgegeben. Das Triggersignal (24) wird um die Verzögerung (27) verzögert und schreitet als verzögertes Triggersignal (24a) Richtung Laser (11) fort, bei dem es ebenfalls verzögert eintrifft. Dabei wird bei jedem Triggersignal (24) eine andere Verzögerung (27) erzeugt, sodass die Triggersignale (24) unterschiedlich verzögert werden und sich somit ein Jittern der Auslösungen des Lasers (11) ergeben.

Sobald das verzögerte Triggersignal (24a) beim Laser (11) eingegangen ist, löst es die Erzeugung eines Messpulses (12, 13, 14, 15, 16) aus, der aus dem Laser (11) ausgekoppelt wird. Der Messpuls (12, 13, 14, 15, 16) trifft sodann auf den rotierenden Spiegel (17), der ihn in die Umgebung der Vorrichtung (100) ablenkt. Die Folge der unterschiedlichen Verzögerungen der Triggersignale (24) ist folglich eine aperiodische Messpulsabfolge. Somit können Störungen, die die durch Aufprägen von gepulstem Fremdlicht gleicher Trägerfrequenz entstehen können, unterdrückt werden, da dieses nur noch zu unkorrelierten Rauschmessungen führt.

Die Bestimmung der Distanz wird im Folgenden an dem Beispiel eines Messpulses (14) erläutert, wobei die Ausführungen natürlich für sämtliche Messpulse (12, 13, 14, 15, 16) zutreffen. Der Messpuls (14) wird an einem Target reflektiert und als reflektierter Messpuls (14a) detektiert. Zur Bestimmung der Distanz zu dem Target wird der erzeugte und aus dem Laser ausgekoppelte Messpuls (14) ebenfalls als gemessener elektrischer Startpuls (28) zu einem ersten Zeitmesser (36a), einem Startpulstimer (29), geleitet. Dies erfolgt durch Auskopplung eines Teils des Messpulses (14) zum Startpulstimer. Zuvor wird das verzögerte Triggersignal (24a) vom Winkelgeber (23) zum Startpulstimer (29) geleitet um die Zeitmessung für den Startpuls (28) zu starten. Der Startpulstimer (29) bestimmt die Zeit (70) zwischen dem Eingang des verzögerten Triggersignals (24a) beim ersten Zeitmesser (36a) bis Eingang des vom Triggersignal (24) ausgelösten Startpulses (28) beim ersten Zeitmesser (36a), die als Signal (30) "Trigger bis Startpuls" am Ende der Messung am Ausgang des Startpulstimers (29) zur Distanzbestimmung zur Verfügung steht.

Um die Laufzeit des Messpulses (14) zu ermitteln wird der empfangene Messpuls (14a) im Detektor (22) elektrisch aufbereitet und vom Detektor als elektrischer Empfangspuls (31) an einen zweiten Zeitmesser (36b), einem Eventpulstimer (32), geleitet. Die Zeitmessung des Eventpulstimers (32) wird analog zum Startpulstimer (29) zuvor durch das verzögerten Triggersignal (24a) gestartet, das dafür vom Winkelgeber (23) zum zweiten Zeitmesser (36b) geleitet wird. Der zweite Zeitmesser (36b) misst die Zeit (71) zwischen dem Eingang des verzögerten Triggersignals (24a) und des Eingangs des Empfangspulses (31), der bei Detektion des empfangenen Messpulses (14a) ausgelöst wird. Am Ausgang des Eventpulstimers (32) liegt nach der Messung das Signal (33) _{"}Trigger bis Empfangspuls" vor, das die gemessene Zeit (71) beinhaltet.

Aus den beiden Signalen (30) und (33) an den Ausgängen des ersten Zeitmessers (36a) und des zweiten Zeitmessers (36b), genauer aus den vom ersten Zeitmesser (36a) und vom zweiten Zeitmesser (36b) gemessenen Zeiten (70, 71), wird durch Differenzbildung die Zeit zwischen dem Eingang des Startpulses (28) beim ersten Zeitmesser (36a) und dem Eingang des Empfangspulses (31) beim zweiten Zeitmessers (36b) ermittelt und mithilfe der Lichtgeschwindigkeit die Distanz (35) zum Target ermittelt. Die Ermittlung der Distanz geschieht bevorzugterweise in einer Auswerteeinheit (34) der Vorrichtung (100).

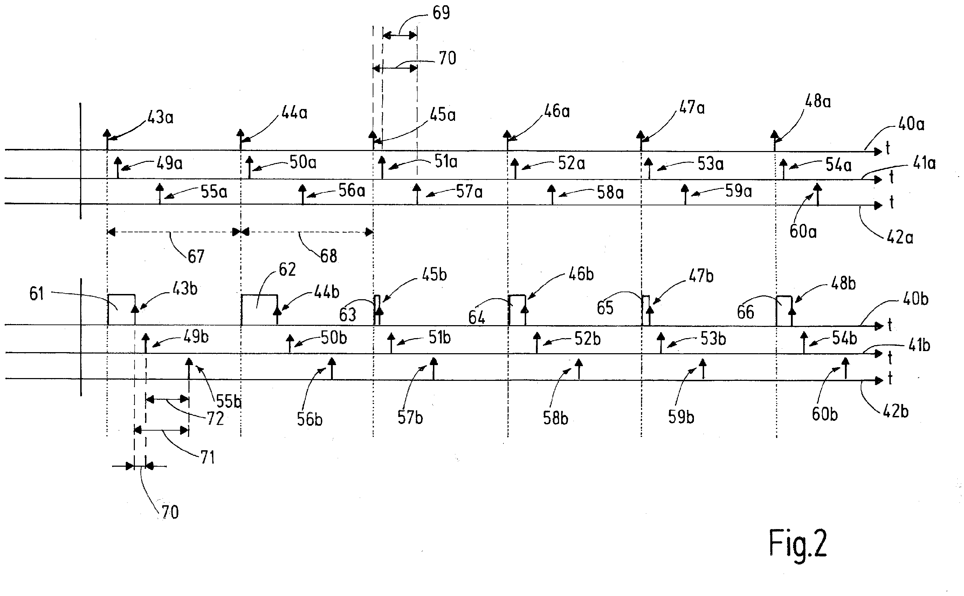

In Figur 2 ist ein Zeitverlaufsdiagramm über die Pulsabfolge des erfindungsgemäßen Verfahrens im Vergleich zu einem aus dem Stand der Technik bekannten Verfahrens gezeigt. Es sind die Pulse zur Auslösung der Erzeugung eines Messpulses, das heißt die Triggersignale (43a, 44a, 45a, 46a, 47a, 48a, 43b, 44b, 45b, 46b, 47b, 48b) bei Eingang bei der Pulserzeugungseinheit sowie die Pulse zur Auslösung der Zeitmessung der beiden Zeitmesser (36a, 36b) bei Eingang bei den jeweiligen Zeitmessern, das heißt die Startpulse (49a, 50a, 51a, 52a, 53a, 54a, 49b, 50b, 51b, 52b, 53b, 54b) und die Empfangspulse (55a, 56a, 57a, 58a, 59a, 60a, 55b, 56b, 57b, 58b, 59b, 60b) auf Zeitstrahlen (40a, 41a, 42a, 40b, 41b, 42b) gezeigt. Die zeitliche Abfolge der Pulse ist für jeweils Pulstriplets gezeigt. Dabei ist im oberen, ausgegrauten Bereich der Figur 2 dargestellt, wie sich die Pulse im unverzögerten, aus dem Stand der Technik bekannten Fall verhalten. Die jeweiligen Pulse und Zeitstrahlen sind mit einem "a" gekennzeichnet. Im unteren Bereich der Figur 2 sind die Pulsabfolgen im erfindungsgemäßen Fall dargestellt, wobei die Pulse und Zeitstrahlen jeweils mit einem "b" betitelt sind.

Auf dem jeweils oberen Zeitstrahl (40a, 40b) sind die Triggersignale (43a, 44a, 45a, 46a, 47a, 48a, 43b, 44b, 45b, 46b, 47b, 48b) bei Eingang bei der Pulserzeugungseinheit (10) dargestellt, während auf mit dem mittleren Zeitstrahl (41a, 41b) die Startpulse (49a, 50a, 51a, 52a, 53a, 54a, 49b, 50b, 51b, 52b, 53b, 54b) bei Eingang beim ersten Zeitmesser (36a) und auf dem unteren Zeitstrahl (42a, 42b) die Empfangspulse (55a, 56a, 57a, 58a, 59a, 60a, 55b, 56b, 57b, 58b, 59b, 60b) bei Eingang beim zweiten Zeitmesser (36b) gezeigt sind. Dabei entsprechen sich die parallel zueinander laufenden Zeitstrahlen (40a, 41a, 42a, 40b, 41b, 42b) in der Zeit, sodass die Zeit bis zu einem gewissen Punkt auf einem der Zeitstrahlen (40a, 41a, 42a, 40b, 41b, 42b) auch bis zu den jeweiligen darüber oder darunter liegenden entsprechenden Punkten auf den anderen Zeitstrahlen vergangen ist. Es kann somit auf Zeitdifferenzen zwischen auf verschiedenen Zeitstrahlen gezeigten Pulsen geschlossen werden.

Im unverzögerten, im oberen Bereich der Figur 2 gezeigten Fall erfolgt der Eingang der Triggersignale (43a, 44a, 45a, 46a, 47a, 48a) bei der Pulserzeugungseinheit (10) periodisch. Die Frequenz der Triggersignale (43a, 44a, 45a, 46a, 47a, 48a) wird als Trägerfrequenz bezeichnet. Die jeweils dazu gehörige Zeitspanne, die sich durch Invertieren der Trägerfrequenz ergibt, wird als Auslösezeit bezeichnet, die ebenfalls konstant ist. Exemplarisch sind zwei identische Auslösezeiten (67, 68) eingezeichnet. Sobald die Triggersignale (43a, 44a, 45a, 46a, 47a, 48a) bei der Pulserzeugungseinheit (10) eingegangen sind, lösen sie die Erzeugung von Messpulsen aus, wobei diese als Startpulse (49a, 50a, 51a, 52a, 53a, 54a) in Richtung eines ersten Zeitmessers ausgekoppelt werden. Da keine Verzögerung des Eingangs der Triggersignale (43a, 44a, 45a, 46a, 47a, 48a) bei der Pulserzeugungseinheit erfolgt, erfolgt auch die Erzeugung der Messpulse, deren Emission von der Pulserzeugungseinheit und somit ebenso die Erzeugung der Startpulse (49a, 50a, 51a, 52a, 53a, 54a) periodisch. Der Abstand zwischen einem Triggersignal (43a, 44a, 45a, 46a, 47a, 48a) und dem korrespondierendem Startpuls (49a, 50a, 51a, 52a, 53a, 54a) ist jeweils identisch.

Die durch die Triggersignale (43a, 44a, 45a, 46a, 47a, 48a) ausgelösten Messpulse werden in unterschiedliche Richtungen, unter verschiedenen Winkeln, ausgesendet. Im vorliegenden Fall werden die Messpulse an demselben Target reflektiert, sodass sich deren Laufzeiten näherungsweise nicht unterscheiden. Somit erfolgen unter regelmäßigen Abständen zu den Startpulsen (49a, 50a, 51a, 52a, 53a, 54a) bzw. Triggersignalen (43a, 44a, 45a, 46a, 47a, 48a) Empfangspulse (55a, 56a, 57a, 58a, 59a, 60a), die durch die Detektion der jeweiligen reflektierten Messpulse ausgelöst werden. Ein Abstand (70) zwischen einem Triggersignal (45a) und dem entsprechendem Empfangspuls (57a) und ein Abstand (69) zwischen einem Startpuls (51a) und dem Empfangspuls (57a) sind beispielhaft im oberen Bereich der Figur 2 eingezeichnet.

Da ein solches Messverfahren durch die Periodizität der Triggersignale (43a, 44a, 45a, 46a, 47a, 48a) und somit der Aussendung der Messpulse sowie des Auslösens der Startpulse (49a, 50a, 51a, 52a, 53a, 54a) sehr einfach durchschaubar ist, lässt es sich leicht stören, insbesondere gezielt, indem Störpulse mit derselben Trägerfrequenz wie die Triggersignale (43a, 44a, 45a, 46a, 47a, 48a) erzeugt werden, die von dem Verfahren zur Distanzmessung bzw. der Vorrichtung zur Distanzmessung nur schwer von dem tatsächlichen Messpulsen unterschieden werden können und somit zur Fehlmessungen führen.

Beim vorliegenden Verfahren, dessen Pulsabfolge im unteren Teil der Figur 2 dargestellt ist, wird der jeweilige Empfang der Triggersignale (43b, 44b, 45b, 46b, 47b, 48b) bei der Pulserzeugungseinheit um Verzögerungszeiten (61, 62, 63, 64, 65, 66) verzögert. Dabei unterscheiden sich die Verzögerungszeiten (61, 62, 63, 64, 65, 66), so dass die Triggersignale (43b, 44b, 45b, 46b, 47b, 48b) unterschiedlich stark verzögert werden. Als Folge ist der Abstand zwischen dem Empfang zweier aufeinander folgender Triggersignale (43b, 44b, 45b, 46b, 47b, 48b) bei der Pulserzeugungseinheit nicht konstant. Es werden die durch die Triggersignale (43b, 44b, 45b, 46b, 47b, 48b) ausgelösten Messpulse sowie die Startpulse (49b, 50b, 51b, 52b, 53b, 54b) für den ersten Zeitmesser aperiodisch erzeugt. Der erste Zeitmesser misst die Zeit (80 zwischen dem Empfang des verzögerten Triggersignals (43b) und dem Empfang des Startpulses (49b), wobei der zweite Zeitmesser die Zeit (81) zwischen dem Empfang des verzögerten Triggersignals (43b) und dem Empfang des Empfangspulses (55b) misst, beides exemplarisch an einer Pulsabfolge in dem unteren Bereich der Figur 2 gezeigt. Aus der Differenz der beiden Zeiten (80, 81) kann die Laufzeit (82) des Messpulses und aus dieser die Distanz zu dem Target, an dem der Messpuls reflektiert wurde, bestimmt werden. Durch die Aperiodizität der verzögerten Triggersignale ist das Verfahren im Gegensatz zum aus dem Stand der Technik bekannten Verfahren erheblich weniger störanfällig gegenüber, insbesondere periodischen, Störpulsen. Vor allem lässt sich das Verfahren nicht mehr bewusst durch Synchronisation eines periodischen Störsignals auf die Trägerfrequenz von außen stören.

### Bezugszeichenliste

- 100: Vorrichtung zur optischen Distanzmessung

- 10: Pulserzeugungseinheit
- 11: Laser
- 12, 13, 14, 15, 16: Messpulse
- 12a, 13a, 14a, 15a, 16a: reflektierte Messpulse
- 17: erste und zweite Pulsablenkungseinheit
- 18, 19: Winkel
- 20: Spiegel
- 21: Drehrichtung des Spiegels
- 22: Detektor
- 23: Winkelgeber
- 24: Triggersignal
- 24a: verzögertes Triggersignal
- 25: Verzögerungseinheit
- 26: Jittergenerator
- 27a: Jitter
- 27b: Verzögerung
- 28: Startpuls
- 29: Startpulstimer
- 30: Signal "Trigger bis Startpuls"
- 31: Empfangspuls
- 32: Eventpulstimer
- 33: Signal "Trigger bis Empfangspuls"
- 34: Auswerteeinheit
- 35: Distanz zum Target
- 36a, 36b: erster Zeitmesser, zweiter Zeitmesser
- 40a, 41a, 42a, 40b, 41b, 42b: Zeitstrahlen
- 43a, 44a, 45a, 46a, 47a, 48a,: Triggersignale
- 43b, 44b, 45b, 46b, 47b, 48b 49a, 50a, 51a, 52a, 53a, 54a,: Startpulse
- 49b, 50b, 51b, 52b, 53b, 54b 55a, 56a, 57a, 58a, 59a, 60a,: Empfangspulse
- 55b, 56b, 57b, 58b, 59b, 60b 61, 62, 63, 64, 65, 66: Verzögerungszeiten
- 67,68: Auslösezeit
- 69: Laufzeit des Messpulses ohne Verzögerung
- 70: Zeit zwischen dem unverzögerten Triggersignal und dem entsprechendem Empfangspuls
- 80: Zeit zwischen dem Empfang des verzögerten Triggersignals und dem Empfang des Startpulssignals
- 81: Zeit zwischen dem Empfang des verzögerten Triggersignals und dem Empfang des Empfangspuls
- 82: Laufzeit des Messpulses

## Patentansprüche

1. Verfahren zur optischen Distanzmessung,
wobei mittels einer Pulserzeugungseinheit (10) eine Vielzahl von Messpulsen (12, 13, 14, 15, 16) emittiert wird,
wobei die emittierten Messpulse (12, 13, 14, 15, 16) zur Distanzmessung ausgesendet werden,
wobei mindestens ein ausgesendeter Messpuls (12, 13, 14, 15, 16) von einem Target in Form eines reflektierten Messpulses (12a, 13a, 14a, 15a, 16a) reflektiert wird,
wobei der vom Target reflektierte Messpuls (12a, 13a, 14a, 15a, 16a) mittels eines Detektors (22) detektiert wird,
wobei die Laufzeit (72) des Messpulses (12, 13, 14, 15, 16) zum Target ermittelt wird,
wobei mithilfe der Lichtgeschwindigkeit die vom Messpuls zurückgelegte Distanz zu dem Target bestimmt wird,
wobei die Aussendung der Messpulse (12, 13, 14, 15, 16) zur Distanzmessung aperiodisch erfolgt,
wobei periodisch Triggersignale (24, 43a, 44a, 45a, 46a, 47a, 48a, 43b, 44b, 45b, 46b, 47b, 48b) für die Pulserzeugungseinheit (10) erzeugt werden,
wobei die Triggersignale (24, 43a, 44a, 45a, 46a, 47a, 48a, 43b, 44b, 45b, 46b, 47b, 48b) die Emission von Messpulsen auslösen,
wobei der Empfang der Triggersignale (24, 43a, 44a, 45a, 46a, 47a, 48a, 43b, 44b, 45b, 46b, 47b, 48b) bei der Pulserzeugungseinheit (10) oder die emittierten Messpulse (12, 13, 14, 15, 16) mittels einer Verzögerungseinheit (25) derart verzögert wird, dass die Aussendung der Messpulse (12, 13, 14, 15, 16) zur Distanzmessung aperiodisch erfolgt,
wobei die Triggersignale (24, 43a, 44a, 45a, 46a, 47a, 48a, 43b, 44b, 45b, 46b, 47b, 48b) für die Pulserzeugungseinheit (10) oder die emittierten Messpulse (12, 13, 14, 15, 16) durch Aufprägen eines Jitters (27a), insbesondere eines statistischen Jitters, verzögert werden,
**dadurch gekennzeichnet, dass**
nach Ablauf der Dauer eines Messfensters keine Pulse mehr detektiert werden, wobei der Jitter (27a) eine Granularität aufweist, und
wobei die Granularität des Jitters (27a) größer oder gleich der Dauer des Messfensters ist.

2. Verfahren zur optischen Distanzmessung nach Anspruch 1,
**dadurch gekennzeichnet, dass**
ausgesendete Messpulse (12, 13, 14, 15, 16) unter unterschiedlichen Winkeln (18, 19) ausgesendet werden, und
dass reflektierte Messpulse aus unterschiedlichen Winkeln (18, 19) empfangen werden,
wobei zum Aussenden von Messpulsen (12, 13, 14, 15, 16) unter unterschiedlichen Winkeln (18, 19) insbesondere eine erste Pulsablenkungseinheit (17) verwendet wird, wobei zum Empfangen von reflektierten Messpulsen (12a, 13a, 14a, 15a, 16a) aus unterschiedlichen Winkeln (18, 19) insbesondere eine zweite Pulsablenkungseinheit (17) verwendet wird.

3. Verfahren zur optischen Distanzmessung nach Anspruch 1,
**dadurch gekennzeichnet, dass**
die Bestimmung der Laufzeit des Messpulses (12, 13, 14, 15, 16) mittels eines ersten Zeitmessers (36a) und eines zweiten Zeitmessers (36b) erfolgt,
wobei die Zeitmessung des ersten Zeitmessers (36a) und die Zeitmessung des zweiten Zeitmessers (36b) durch das den Messpuls (12, 13, 14, 15, 16) auslösende Triggersignal (24, 43a, 44a, 45a, 46a, 47a, 48a, 43b, 44b, 45b, 46b, 47b, 48b) gestartet wird.

4. Verfahren zur optischen Distanzmessung nach einem der Ansprüche 1 oder 2, **dadurch gekennzeichnet, dass**
mittels der Verzögerungseinheit (25) erzeugte Verzögerungszeiten (61, 62, 63, 64, 65, 66) derart gewählt werden, dass die Verzögerungszeiten (61, 62, 63, 64, 65, 66) der Dauer von mindestens einem Messfenster entsprechen, sodass die Verzögerungszeiten (61, 62, 63, 64, 65, 66) zu signifikanten Verschiebungen in der Distanzmessung führen.

5. Verfahren zur optischen Distanzmessung nach einem der vorherigen Ansprüche,
**dadurch gekennzeichnet, dass**
der Detektor (22) Pulse detektiert,
wobei die vom Detektor (22) detektierten Pulse reflektierte Messpulse (12a, 13a, 14a, 15a, 16a) und Störpulse umfassen,
wobei aufgrund der Aperiodizität der Aussendung der Messpulse (12, 13, 14, 15, 16) zur Distanzmessung detektierte Störpulse, insbesondere periodische Störpulse, von detektierten, an einem Target reflektierten Messpulsen (12a, 13a, 14a, 15a, 16a) zur Distanzmessung unterschieden werden.

6. Vorrichtung (100) zur Distanzmessung,
umfassend eine Pulserzeugungseinheit (10) zur Erzeugung von Messpulsen (12, 13, 14, 15, 16) und einen Detektor (22) zum Detektieren von mindestens einem vom Target reflektierten Messpuls (12a, 13a, 14a, 15a, 16a), wobei
die Vorrichtung (100) dazu ausgebildet ist die Messpulse (12, 13, 14, 15, 16) aperiodisch zur Distanzmessung auszusenden,
**dadurch gekennzeichnet, dass**
die Vorrichtung (100) zur Durchführung eines Verfahrens nach einem der Ansprüche 1 bis 5 ausgebildet ist.

7. Vorrichtung (100) zur Distanzmessung nach Anspruch 6,
**dadurch gekennzeichnet, dass**
die Vorrichtung eine Verzögerungseinheit (25) aufweist, wobei die Verzögerungseinheit (25) dazu ausgebildet ist, die von der Pulserzeugungseinheit (10) emittierten Messpulse (12, 13, 14, 15, 16) oder die Messpulse (12, 13, 14, 15, 16) auslösende Triggersignale (24, 43a, 44a, 45a, 46a, 47a, 48a, 43b, 44b, 45b, 46b, 47b, 48b) für die Pulserzeugungseinheit (10) derart zu verzögern, dass die Aussendung der Messpulse (12, 13, 14, 15, 16) zur Distanzmessung aperiodisch erfolgt.

8. Vorrichtung (100) zur Distanzmessung nach Anspruch 7,
**dadurch gekennzeichnet, dass**
die Vorrichtung (100) dazu ausgebildet ist aufgrund der Aperiodizität der Aussendung der Messpulse (12, 13, 14, 15, 16) zur Distanzmessung vom Detektor (22) detektierte Störpulse, insbesondere periodische Störpulse, von detektierten, an einem Target reflektierten Messpulsen (12a, 13a, 14a, 15a, 16a) zur Distanzmessung zu unterscheiden.

9. Vorrichtung (100) zur optischen Distanzmessung nach einem der Ansprüche 6 bis 8,
**dadurch gekennzeichnet, dass**
die Vorrichtung (100) eine erste Pulsablenkungseinheit (17), insbesondere einen drehbaren Spiegel (20), zum Aussenden der Messpulse (12, 13, 14, 15, 16) unter unterschiedlichen Winkeln (18, 19) aufweist,
wobei die Vorrichtung (100) ferner eine zweite Pulsablenkungseinheit (17), insbesondere einen drehbaren Spiegel (20), zum Empfangen von reflektierten Messpulsen (12a, 13a, 14a, 15a, 16a) aus unterschiedlichen Winkeln (18, 19) umfasst,
wobei die erste Pulsablenkungseinheit (17) und die zweite Pulsablenkungseinheit (17) insbesondere identisch sind.

10. Vorrichtung (100) zur optischen Distanzmessung nach einem der Ansprüche 7 bis 9,
**dadurch gekennzeichnet, dass**
es sich bei der Verzögerungseinheit (25) um einen Jittergenerator (26) oder eine erste Pulsablenkungseinheit (17) handelt.

## Claims

1. Method for optical distance measurement,
wherein a plurality of measuring pulses (12, 13, 14, 15, 16) is emitted by means of a pulse generation unit (10),
wherein the emitted measuring pulses (12, 13, 14, 15, 16) are emitted for distance measurement,
wherein at least one emitted measuring pulse (12, 13, 14, 15, 16) is reflected by a target in the form of a reflected measuring pulse (12a, 13a, 14a, 15a, 16a), wherein the measuring pulse (12a, 13a, 14a, 15a, 16a) reflected by the target is detected by means of a detector (22),
wherein the transit time (72) of the measuring pulse (12, 13, 14, 15, 16) to the target is determined,
wherein the distance covered by the measuring pulse to the target is determined with the aid of the speed of light,
wherein the emission of the measuring pulses (12, 13, 14, 15, 16) for distance measurement takes place aperiodically,
wherein periodically trigger signals (24, 43a, 44a, 45a, 46a, 47a, 48a, 43b, 44b, 45b, 46b, 47b, 48b) are generated for the pulse generation unit (10),
wherein the trigger signals (24, 43a, 44a, 45a, 46a, 47a, 48a, 43b, 44b, 45b, 46b, 47b, 48b) trigger the emission of measuring pulses,
wherein the receipt of the trigger signals (24, 43a, 44a, 45a, 46a, 47a, 48a, 43b, 44b, 45b, 46b, 47b, 48b) at the pulse generation unit (10) or the emitted measuring pulses (12, 13, 14, 15, 16) is delayed by means of a delay unit (25) in such a way that the emission of the measuring pulses (12, 13, 14, 15, 16) for distance measurement takes place aperiodically,
wherein the trigger signals (24, 43a, 44a, 45a, 46a, 47a, 48a, 43b, 44b, 45b, 46b, 47b, 48b) for the pulse generation unit (10) or the emitted measuring pulses (12, 13, 14, 15, 16) are delayed by impressing a jitter (27a), in particular a statistical jitter
**characterized in that**
after the duration of a measurement window has elapsed, no more pulses are detected,
wherein the jitter (27a) has a granularity, and
wherein the granularity of the jitter (27a) is greater than or equal to the duration of the measurement window.

2. Method for optical distance measurement according to claim 1,
**characterized in that**
emitted measuring pulses (12, 13, 14, 15, 16) are emitted at different angles (18, 19), and
**in that** reflected measuring pulses are received from different angles (18, 19), wherein for emitting measuring pulses (12, 13, 14, 15, 16) at different angles (18, 19), in particular a first pulse deflection unit (17) is used, wherein for receiving reflected measuring pulses (12a, 13a, 14a, 15a, 16a) from different angles (18, 19), in particular a second pulse deflection unit (17) is used.

3. Method for optical distance measurement according to claim 1,
**characterized in that**
the determining of the runtime of the measuring pulse (12, 13, 14, 15, 16) is carried out by means of a first timer (36a) and a second timer (36b),
wherein the time measurement of the first timer (36a) and the time measurement of the second timer (36b) is started by the trigger signal (24, 43a, 44a, 45a, 46a, 47a, 48a, 43b, 44b, 45b, 46b, 47b, 48b) triggering the measuring pulse (12, 13, 14, 15, 16).

4. Method for optical distance measurement according to one of claims 1 or 2, **characterized in that**
delay times (61, 62, 63, 64, 65, 66) generated by means of the delay unit (25) are selected in such a way that the delay times (61, 62, 63, 64, 65, 66) correspond to the duration of at least one measurement window, so that the delay times (61, 62, 63, 64, 65, 66) lead to significant shifts in the distance measurement.

5. Method for optical distance measurement according to one of the preceding claims,
**characterized in that**
the detector (22) detects pulses,
wherein the pulses detected by the detector (22) comprise reflected measuring pulses (12a, 13a, 14a, 15a, 16a) and interference pulses, wherein, due to the aperiodicity of the emission of the measuring pulses (12, 13, 14, 15, 16) for distance measurement, detected interference pulses, in particular periodic interference pulses, are distinguished from detected measuring pulses (12a, 13a, 14a, 15a, 16a) reflected on a target for distance measurement.

6. Device (100) for distance measurement,
comprising a pulse generation unit (10) for generating measuring pulses (12, 13, 14, 15, 16) and a detector (22) for detecting at least one measuring pulse (12a, 13a, 14a, 15a, 16a) reflected by the target,
wherein the device (100) is configured to emit the measuring pulses (12, 13, 14, 15, 16) aperiodically for distance measurement
**characterized in that**
the device (100) is configured to carry out a method according to one of claims 1 to 5.

7. Device (100) for distance measurement according to claim 6,
**characterized in that**
the device has a delay unit (25), wherein the delay unit (25) is configured to delay the measuring pulses (12, 13, 14, 15, 16) emitted by the pulse generation unit (10) or trigger signals (24, 43a, 44a, 45a, 46a, 47a, 48a, 43b, 44b, 45b, 46b, 47b, 48b) triggering the measurement pulses (12, 13, 14, 15, 16) for the pulse generation unit (10) in such a way that the emission of the measuring pulses (12, 13, 14, 15, 16) for distance measurement takes place aperiodically.

8. Device (100) for distance measurement according to claim 7,
**characterized in that**
the device (100) is configured, due to the aperiodicity of the emission of the measuring pulses (12, 13, 14, 15, 16) for distance measurement, to distinguish interference pulses, in particular periodic interference pulses, detected by the detector (22) from detected measuring pulses (12a, 13a, 14a, 15a, 16a) reflected on a target for distance measurement.

9. Device (100) for optical distance measurement according to one of the claims 6 to 8,
**characterized in that**
the device (100) has a first pulse deflection unit (17), in particular a rotatable mirror (20), for emitting the measuring pulses (12, 13, 14, 15, 16) at different angles (18, 19),
wherein the device (100) further comprises a second pulse deflection unit (17), in particular a rotatable mirror (20), for receiving reflected measuring pulses (12a, 13a, 14a, 15a, 16a) from different angles (18, 19),
wherein the first pulse deflection unit (17) and the second pulse deflection unit (17) are in particular identical.

10. Device (100) for optical distance measurement according to one of claims 7 to 9,
**characterized in that**
the delay unit (25) is a jitter generator (26) or a first pulse deflection unit (17).

## Revendications

1. Procédé pour la mesure optique de distance,
dans lequel, au moyen d'une unité de génération d'impulsions (10), une pluralité d'impulsions de mesure (12, 13, 14, 15, 16) sont émises,
dans lequel les impulsions de mesure (12, 13, 14, 15, 16) émises sont envoyées pour la mesure de distance,
dans lequel au moins une impulsion de mesure (12, 13, 14, 15, 16) envoyée est réfléchie par une cible sous la forme d'une impulsion de mesure réfléchie (12a, 13a, 14a, 15a, 16a),
dans lequel l'impulsion de mesure (12a, 13a, 14a, 15a, 16a) réfléchie par la cible est détectée au moyen d'un détecteur (22),
dans lequel le temps de propagation (72) de l'impulsion de mesure (12, 13, 14, 15, 16) vers la cible est déterminé,
dans lequel, au moyen de la vitesse de la lumière, la distance parcourue par l'impulsion de mesure jusqu'à la cible est définie,
dans lequel l'envoi des impulsions de mesure (12, 13, 14, 15, 16) pour la mesure de distance s'effectue de manière apériodique,
dans lequel des signaux de déclenchement (24, 43a, 44a, 45a, 46a, 47a, 48a, 43b, 44b, 45b, 46b, 47b, 48b) sont générés périodiquement pour l'unité de génération d'impulsions (10),
dans lequel les signaux de déclenchement (24, 43a, 44a, 45a, 46a, 47a, 48a, 43b, 44b, 45b, 46b, 47b, 48b) déclenchent l'émission d'impulsions de mesure,
dans lequel la réception des signaux de déclenchement (24, 43a, 44a, 45a, 46a, 47a, 48a, 43b, 44b, 45b, 46b, 47b, 48b) est retardée au niveau de l'unité de génération d'impulsions (10) ou bien les impulsions de mesure émises (12, 13, 14, 15, 16) sont retardées aux moyen d'une unité de retard (25) de telle sorte que l'envoi des impulsions de mesure (12, 13, 14, 15, 16) pour la mesure de distance s'effectue de manière apériodique,
dans lequel les signaux de déclenchement (24, 43a, 44a, 45a, 46a, 47a, 48a, 43b, 44b, 45b, 46b, 47b, 48b) pour l'unité de génération d'impulsions (10) ou les impulsions de mesure émises (12, 13, 14, 15, 16) sont retardés par application d'une gigue (27a), en particulier d'une gigue statistique,
**caractérisé en ce**
**qu'**à l'expiration de la durée d'une fenêtre de mesure on ne détecte plus d'impulsions, la gigue (27a) présentant une granularité, et
la granularité de la gigue (27a) étant supérieure ou égale à la durée de la fenêtre de mesure.

2. Procédé pour la mesure optique de distance selon la revendication 1,
**caractérisé en ce**
**que** des impulsions de mesure (12, 13, 14, 15, 16) envoyées sont envoyées selon des angles (18, 19) différents, et
**que** des impulsions de mesure réfléchies sont réceptionnées à partir d'angles (18, 19) différents,
dans lequel, pour l'envoi d'impulsions de mesure (12, 13, 14, 15, 16) selon des angles différents (18, 19), on utilise en particulier une première unité de déflexion d'impulsions (17), dans lequel, pour la réception d'impulsions de mesure réfléchies (12a, 13a, 14a, 15a, 16a) à partir d'angles différents (18, 19), on utilise en particulier une deuxième unité de déflexion d'impulsions (17).

3. Procédé pour la mesure optique de distance selon la revendication 1,
**caractérisé en ce**
**que** la définition du temps de propagation des impulsions de mesure (12, 13, 14, 15, 16) s'effectue au moyen d'un premier chronomètre (36a) et d'un deuxième chronomètre (36b),
dans lequel la mesure du temps du premier chronomètre (36a) et la mesure du temps du deuxième chronomètre (36b) sont démarrées grâce au signal de déclenchement (24, 43a, 44a, 45a, 46a, 47a, 48a, 43b, 44b, 45b, 46b, 47b, 48b) déclenchant l'impulsion de mesure (12, 13, 14, 15, 16).

4. Procédé pour la mesure optique de distance selon l'une des revendications 1 ou 2, **caractérisé en ce**
**que** des temps de retard (61, 62, 63, 64, 65, 66) générés au moyen de l'unité de retard (25) sont sélectionnés de telle sorte que les temps de retard (61, 62, 63, 64, 65, 66) correspondent à la durée d'au moins une fenêtre de mesure, de sorte que les temps de retard (61, 62, 63, 64, 65, 66) produisent des décalages significatifs dans la mesure de distance.

5. Procédé pour la mesure optique de distance selon l'une des revendications précédentes,
**caractérisé en ce**
**que** le détecteur (22) détecte des impulsions,
dans lequel les impulsions détectées par le détecteur (22) comprennent des impulsions de mesure réfléchies (12a, 13a, 14a, 15a, 16a) et des impulsions parasites,
dans lequel, en raison de l'apériodicité de l'envoi des impulsions de mesure (12, 13, 14, 15, 16) pour la mesure de distance, des impulsions parasites détectées, en particulier des impulsions parasites périodiques, sont distinguées d'impulsions de mesure (12a, 13a, 14a, 15a, 16a) réfléchies par une cible pour la mesure de distance.

6. Dispositif (100) pour la mesure de distance,
comprenant une unité de génération d'impulsions (10) pour la génération d'impulsions de mesure (12, 13, 14, 15, 16) et un détecteur (22) pour la détection d'au moins une impulsion de mesure (12a, 13a, 14a, 15a, 16a) réfléchie par la cible,
dans lequel le dispositif (100) est conçu pour envoyer les impulsions de mesure (12, 13, 14, 15, 16) de façon apériodique pour la mesure de distance,
**caractérisé en ce**
**que** le dispositif (100) est conçu pour la mise en œuvre d'un procédé selon l'une des revendications 1 à 5.

7. Dispositif (100) pour la mesure de distance selon la revendication 6,
**caractérisé en ce**
**que** le dispositif présente une unité de retard (25), dans lequel l'unité de retard (25) est conçue pour retarder les impulsions de mesure (12, 13, 14, 15, 16) émises par l'unité de génération d'impulsions (10) ou les signaux de déclenchement (24, 43a, 44a, 45a, 46a, 47a, 48a, 43b, 44b, 45b, 46b, 47b, 48b) qui déclenchent les impulsions de mesure (12, 13, 14, 15, 16) pour l'unité de génération d'impulsions (10), de telle sorte que l'envoi des impulsions de mesure (12, 13, 14, 15, 16) pour la mesure de distance s'effectue de façon apériodique.

8. Dispositif (100) pour la mesure de distance selon la revendication 7,
**caractérisé en ce**
**que** le dispositif (100) est conçu, en raison de l'apériodicité de l'envoi des impulsions de mesure (12, 13, 14, 15, 16) pour la mesure de distance, pour distinguer des impulsions parasites détectées par le détecteur (22), en particulier des impulsions parasites périodiques, d'impulsions de mesure (12a, 13a, 14a, 15a, 16a) détectées, réfléchies par une cible, pour la mesure de distance.

9. Dispositif (100) pour la mesure optique de distance selon l'une des revendications 6 à 8,
**caractérisé en ce**
**que** le dispositif (100) présente une première unité de déflexion d'impulsions (17), en particulier un miroir rotatif (20), pour l'envoi des impulsions de mesure (12, 13, 14, 15, 16) selon des angles (18, 19) différents,
dans lequel le dispositif (100) comprend en outre une deuxième unité de déflexion d'impulsions (17), en particulier un miroir rotatif (20), pour réceptionner des impulsions de mesure réfléchies (12a, 13a, 14a, 15a, 16a) à partir d'angles (18, 19) différents,
dans lequel la première unité de déflexion d'impulsions (17) et la deuxième unité de déflexion d'impulsions (17) sont en particulier identiques.

10. Dispositif (100) pour la mesure optique de distance selon l'une des revendications 7 à 9,
**caractérisé en ce**
**qu'**en ce qui concerne l'unité de retard (25), il s'agit d'un générateur de gigue (26) ou d'une première unité de déflexion d'impulsions (17).
